# EUROPEAN PATENT APPLICATION

(11) **EP 2 253 412 A1**
(43) Date of publication of application: **24.11.2010**
(21) Application number: 10163006.9
(22) Date of filing: 17.05.2010
(51) Int. Cl.: B23K 26/10, B23K 26/08, B23K 37/02, B23K 37/053, B23K 26/38

(54) **Supporting and working apparatus for axially developing workpieces, working plant comprising the same apparatus, and working method for workpieces in such a plant**

(30) Priority: 18.05.2009 IT MI20090864
(71) Applicant: ANTIL S.p.A., 20098 San Giuliano Milanese (MI) (IT)
(72) Inventor: Zanella, Paolo, 20098 San Giuliano Milanese (IT)
(74) Representative: Coloberti, Luigi

(57) **Abstract**

The supporting and working apparatus (19) for supporting and working axially developing workpieces (P) for a working plant (10) comprises a frame (20) for rotatably carrying an annular element (21) provided with at least one working device (22) movable in a controlled mode; the supporting and working apparatus (19) further comprises at least a first and a second supporting and sliding members (23, 24) for the workpiece (P), angularly spaced apart on the support frame (20), each of said supporting and sliding members (23, 24) being movable orthogonally to the axis of the apparatus (19) in a controlled mode, and detecting means (51) on the support frame (20) for detecting the position and the deformation of the workpiece (P) with respect to a longitudinal reference axis (AR). The working device (22) and/or the members (23, 24) for supporting the workpiece (P) are selectively movable at each cross section to be worked of the workpiece (P), for positioning the working device (22) and the workpiece (P) in relation to each other, orthogonally to the longitudinal reference axis (AR), in a plane orthogonal to an operative axis (AL) of the working device (22), as a function of working parameters stored in a control unit and/or as a function of reference signals generated by the detecting means (51) at each cross section of the workpiece (P).

## Description

### BACKGROUND OF THE INVENTION

The present invention relates to an apparatus for supporting and working axially developing or elongated workpieces, in particular for cutting and/or working tubes, beams, sections and similar; the invention also relates to a working plant for working axially developing workpieces comprising the same apparatus, and to a method for working the workpieces adapted for said working plant.

### BACKGROUND ART

Working plants for cutting and working tubes and axially developing workpieces are known in general, for example from EP-A-0 983 819, which plants conventionally comprise a base structure on which suitable means for supporting a workpiece is provided, said suitable means being for example in the form of a plurality of rollers arranged spaced apart from each other along the axis of the same workpiece and conformed to enable the workpiece to move axially by sliding.

On the base structure, a frame is further provided for rotatably supporting an annular element provided with a working device, for example in the form of a laser cutting head, movable in a controlled mode by means of robotised actuating means conformed to move the working device as a function of an operative program stored in a control unit of the plant.

Owing to the axial movement of the workpiece, the various cross sections to be worked are moved at the working device for being tightened by one or more clamps carried by the same frame, so as to impose a prefixed arrangement to the single cross section to be worked, said prefixed arrangement being coaxial to the rotatable annular element for supporting the working device.

Thus, since at the single cross section, the axis of the workpiece is coincident with the longitudinal reference axis or "machine axis" of the rotatable annular element, the dimensions of the working operations come to be referred to the effective axis of the workpiece.

However, each of the axially developing workpieces to be worked, that are obtained by conventional rolling or profiling processes, has an its own deviation with respect to an imaginary rectilinear axis, which deviation will be unique for each workpiece and depending on the deformation that normally is taken on, according to the circumstances, by the single rolled or profiled workpieces.

Since, as already said, the working operations performed by the known cutting or working plants have exact dimensions with respect to the axis of the workpiece, then the same dimensions of the working operations will have an error with reference to an imaginary straight line, due to the own deformation of the workpiece.

Due to such error in the dimensions, the workpieces worked with the known plants, can thus result non-suitable for all the types of practical applications; for example, a stiff beam or section of remarkable dimensions and accountable for the spatial alignment of other parts of a structure, when worked with the known plants, would bring to a misalignment of the parts of the same structure, with consequent assembling and/or operational problems.

A further drawback of the known working plants relates to the high longitudinal overall dimensions of the structure, since, due to the axial movement of the workpieces, in order to enable the workpieces to be worked along their whole extension, the proper supporting means must be provided along a longitudinal extension equal to twice as the length of said workpieces.

WO-A-02/096594 relates to an apparatus for cutting workpieces, comprising a roller conveyor for supporting and moving the workpiece in an axial direction; the apparatus also comprises a frame having a circular guide for a carrier on which a cutting element is mounted via a robot arm. Adjustable gripping rollers are arranged in an opening of the frame for holding down the workpiece on the roller conveyor in horizontal and vertical direction, so that the workpiece can only move in its longitudinal direction.

### OBJECTS OF THE INVENTION

Main object of the present invention is to provide an apparatus for supporting and working axially developing or elongated workpieces, a working plant comprising said apparatus, and also a working method, with which working operations on the workpieces can be performed, selectively and in versatile mode, with dimensions referred to the effective axis of the same workpieces or referred to an axis or an imaginary straight line, as a function of the requirements or the end use of the workpieces.

Another object of the present invention is to provide a working plant for working axially developing workpieces, which working plant has a limited longitudinal overall dimensions, enabling the installation of said working plant in reduced spaces.

### BRIEF DESCRIPTION OF THE INVENTION

According to a first aspect of the invention, the above can be achieved by a supporting and working apparatus for supporting and working axially developing workpieces for a working plant, in which each workpiece extends along a longitudinal axis, the supporting and working apparatus comprising:
a support frame,
an annular element rotatably carried by said support frame to rotate around the workpiece, said annular element being provided with at least one working device movable in a controlled mode and first actuating means for moving the working device as a function of an operative program stored in a control unit, the working device having an operative axis of working; the support frame and the workpiece being movable in relation to each other in the direction of a longitudinal reference axis for positioning the working device at cross sections to be worked along the same workpiece,
   characterised by comprising:
   at least a first and a second supporting and sliding members for the workpiece, angularly spaced apart on said support frame, each of said supporting and sliding members being movable orthogonally to the longitudinal reference axis in a plane passing through the same reference axis,
   second actuating means for moving said supporting and sliding members for the workpiece, and
   at least a first and a second detecting means for detecting the position of the workpiece in relation to said longitudinal reference axis, arranged on said support frame at said first, respectively said second supporting and sliding members, said detecting means being conformed to generate reference signals linked to deformations of the workpiece along its own axis,
   said first actuating means for the working device and/or said second actuating means for the supporting members of the workpiece being selectively operatable at each cross section to be worked of the workpiece, to position in relation to each other the working device and the workpiece orthogonally to the longitudinal reference axis, in a plane orthogonal to the operative axis of the working device, as a function of working parameters stored in the control unit and/or as a function of the reference signals generated by said detecting means at each cross section of the workpiece.

According to another aspect of the present invention, the above can be achieved by a working plant for working axially developing workpieces having a longitudinal axis, the plant comprising:
a base structure; and
support means on said base structure for supporting a workpiece,
   characterised by comprising:
   a supporting and working apparatus for said axially developing workpieces according to claim 1, and
   movement means for moving the supporting and working apparatus and the workpiece in relation to each other in the direction of said longitudinal reference axis.

According to a further aspect of the present invention, the above can be achieved by a working method for working axially developing workpieces, adapted for a working plant for working axially developing workpieces according to claim 9, comprising the steps of:
placing a workpiece on said support means;
axially positioning the working device at a first cross section to be worked of the axially developing workpiece, by moving the support frame of the working apparatus and the workpiece in relation to each other;
performing one or more working operations with the working device in said cross section to be worked; and
repeating the step of positioning the working device and the step of performing the working operations for each cross section to be worked of the axially developing workpiece,
   characterised by comprising, prior to said step of performing the working operations and for each cross section to be worked of the workpiece, the supplementary steps of:
   moving and/or maintaining the supporting and sliding members of the supporting and working apparatus against lower side surfaces of the axially developing workpiece, at the cross section to be worked; and
   positioning and/or supporting the cross section to be worked of the axially developing workpiece in relation to the working device by the supporting and sliding members, orthogonally to the longitudinal reference axis in a plane orthogonal to the operative axis of the working device, for defining a working position of the cross section to be worked with respect to the working device during the step of performing the working operations.

### BRIEF DESCRIPTION OF DRAWINGS

These and further features according to the present invention will better appear from the following description with reference to the enclosed drawings, wherein:
Figure 1 is a perspective view of the working plant comprising the apparatus for supporting and working axially developing workpieces, according to the present invention;
Figure 2 is a front view of Figure 1;
Figure 3 is an enlarged detail of the apparatus shown in Figure 1, viewed from the front side;
Figure 4 is an enlarged detail of the apparatus shown in Figure 1, viewed from the rear side;
Figures 5A to 5D illustrate a first schematic working sequence of a workpiece according to the present invention, with dimensions of the working operations referred to the effective axis of the workpiece;
Figures 6A to 6D illustrate a second schematic working sequence of a workpiece according to the present invention, with dimensions of the working operations referred to an imaginary straight line defined by the rotational axis of the rotatable annular element provided with the working device;
Figure 7 is a flow diagram of the working method according to the present invention for a working mode on the workpieces with dimensions referred to the effective axis of said workpieces;
Figure 8 is a flow diagram of the working method according to the present invention for a working mode on the workpieces with dimensions referred to an axis or an imaginary straight line; and
Figure 9 is a block diagram of the working plant according to the present invention.

### DETAILED DESCRIPTION OF THE INVENTION

The general features of the present invention will be disclosed hereinafter by means of several embodiments.

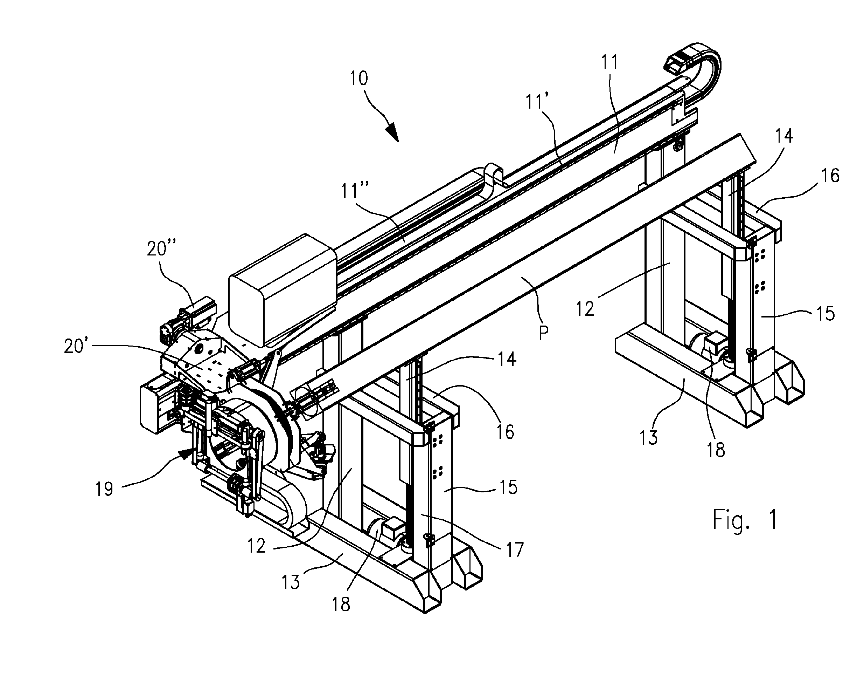

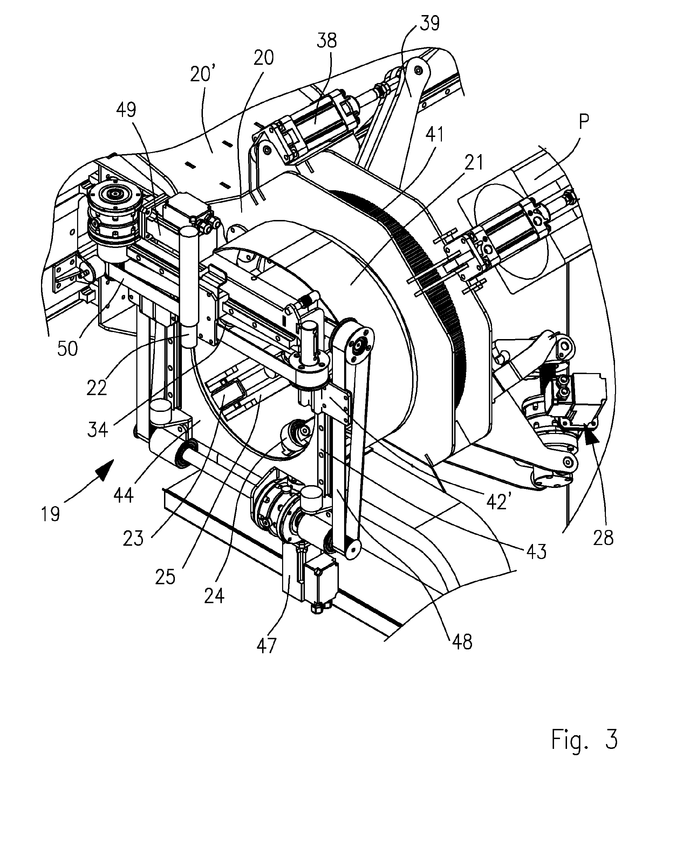

In the Figures 1 to 4, a working plant for working axially developing workpieces is shown comprising an apparatus for supporting and working said workpieces, according to the present invention, which working plant is particularly suitable for carrying out holes, slots and cuts of various dimensions on tubes, sections, beams and, in general, rolled or profiled workpieces extending along a longitudinal axis.

The working plant, overall denoted with the reference number 10, comprises a base structure that, in the shown embodiment, consists of a longitudinal beam 11, carried by a plurality of vertical posts 12, in this case two vertical posts 12, each vertical post being provided with a resting base 13.

The working plant also comprises suitable means for supporting a workpiece P, which means, in the shown preferred embodiment, is in the form of a plurality of support elements 14, arranged spaced apart from each other along the base structure, for supporting the workpiece in a horizontal working position, parallel to said base structure.

Preferably, each support element 14 is in the form of a vertical bar having, on the upper portion, a suitable seat 14', for example of V-like shape, for receiving the workpiece P, said support bar 14 being vertically slidable to be selectively movable, by suitable actuating means, between a raised support position and a lowered disengagement position of the workpiece P.

In particular, the support bars 14 are arranged at the vertical posts 12, and are slidable along vertical guiding bars 15 that extend parallel and spaced apart from the posts 12 starting from the resting bases 13 of the structure, the vertical guiding bars 15 being connected with said posts 12 downwardly by the resting bases 13 and upwardly by connecting rods 16.

The actuating means for moving the support bars 14 preferably comprises a screw-nut mechanism 17 and an electric geared motor 18 for each support bar 14, wherein the screw 17' is vertically supported in rotatable mode by the resting base 13 for being selectively controlled to rotate by the geared motor 18, and wherein the feed nut, not shown, is inserted inside the support bar 14 and engages the screw 17' of the mechanism 17 for controlling the sliding of the support bar 14.

The working plant 10 according to the invention further comprises a supporting and working apparatus 19 for supporting and working the axially developing workpieces, comprising a support frame 20 for an annular element 21 rotatably carried by said frame 20 to rotate in coaxial or substantially coaxial mode around the workpiece P; the annular element 21 is provided in turn with at least one working device 22, for example a cutting laser or plasma torch or another working tool, having an operative working axis AL and being movable in a controlled mode, said annular element 21 having as well first actuating means, for example of robotised type, described in the following, conformed to move the working device 22 as a function of a working program stored in a control unit of the working plant.

The working plant provides as well means for moving the support frame 20 and the workpiece P in relation to each other in the direction of a longitudinal reference axis, coaxial to the annular element 21, in order to position the working device 22 at cross sections to be worked along said workpiece P.

In the shown preferred embodiment, the relative movement means comprises a guide trolley 20' for the support frame 20 of the supporting and working apparatus 19, which trolley 20' is axially movable along longitudinal sliding rails 11' provided on a side of the beam 11 of the base structure, or along a portion of said rails 11', with one or more support bars 14 being arranged in disengagement position of the workpiece P, so that said apparatus 19 can be moved along the workpiece P.

The axial movement of the trolley 20' is achieved by means of an electric actuator, for example in the form of a geared motor 20" mounted on the same trolley 20' for controlling a toothed belt driving system 11" provided along the beam 11, or for controlling the rotation of a proper control wheel, for example a gear wheel, not shown, suitable for being operatively engaged with engaging means such as a rack, so as to move the trolley 20' in a controlled mode.

According to the present invention, the supporting and working apparatus 19 comprises at least a first and a second supporting and sliding members 23, 24 for the workpiece, angularly spaced apart on the support frame 20, each of which supporting and sliding members being movable orthogonally to the longitudinal reference axis, in a plane passing through the same reference axis, by means of second actuating means, as described in the following.

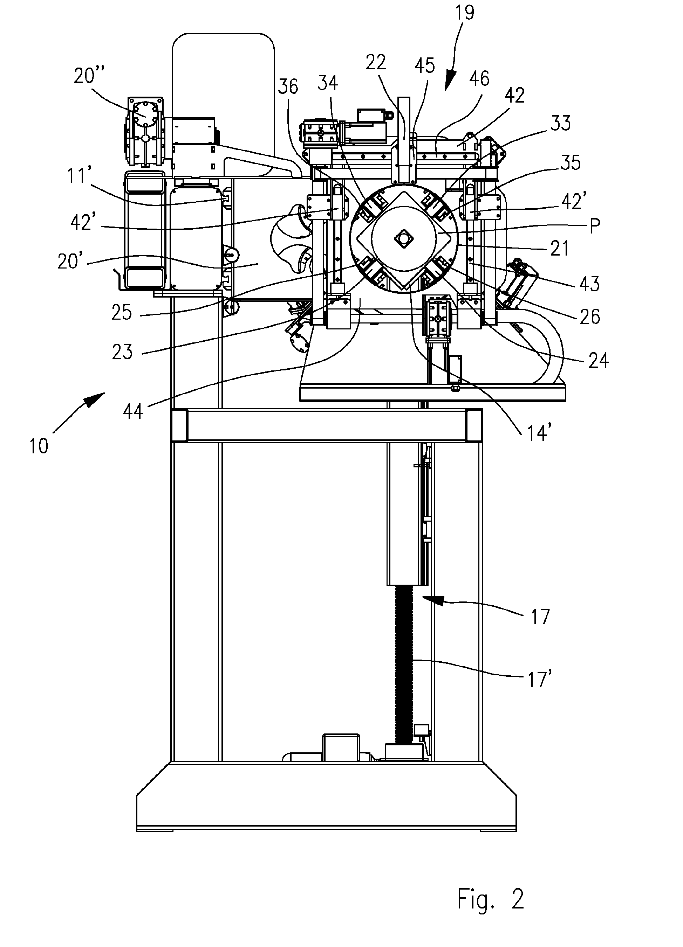

Preferably, as better shown in the Figures 2, 3 and 4, the supporting and sliding members 23, 24 are in the form of a first and a second rollers 23, 24 carried by the free ends of a first, respectively a second rocking arm 25, 26, hinged to the support frame 20 tangentially to the annular element 21 of the apparatus 19, so as to protrude within said annular element 21, on a lower side of said annular element 21, in symmetrical positions with respect to the vertical line passing through the longitudinal reference axis.

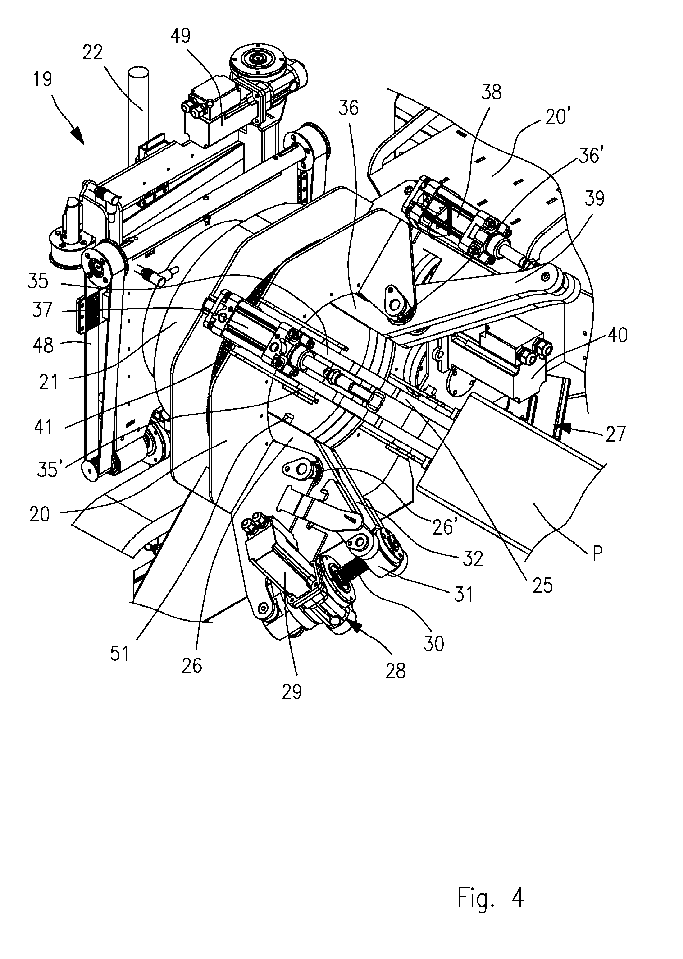

Preferably, the rollers 23, 24 lie and, as said, move orthogonally with respect to the longitudinal reference axis in a respective plane passing through the same reference axis, furthermore said rollers 23, 24 have rotational axes orthogonal to each other, sloping symmetrically at 45° with respect to the vertical line, and also orthogonal and spaced apart with respect to the longitudinal reference axis of the apparatus 19; the hinging axes of the first and the second rocking arm 25, 26, of which only the axis 26' is visible in Figure 4, have an arrangement similar to the rotational axes of the rollers 23, 24, being however arranged parallel and spaced apart with respect to the same rotational axes in the longitudinal direction.

Owing to such arrangement of the movable rollers 23, 24 of the apparatus 19, the cross sections to be worked of the workpiece, which come respectively to lie near the working device 22, can be selectively supported, at adjacent, lower surfaces of the same workpiece, as that will be explained in the following.

The second actuating means for moving the supporting and sliding rollers 23, 24 in the respective planes passing through the longitudinal reference axis, comprises a first and a second electronic actuators 27, 28, capable of controlling in extremely accurate mode the positioning of said supporting rollers 23, 24; preferably, each actuator 27, 28 comprises an electric geared motor 29, carried by the frame 20, for controlling the rotation of a screw 30 of a screw-nut mechanism, wherein the feed nut 31 is operatively connected with a rear extension 32 of a respective rocking arm 25, 26, extending from an opposing end of the same arm with respect to the supporting rollers 23, 24.

As an alternative to the screw-nut mechanism, a cam driving system can be provided as an example, or another driving system capable of assuring high positioning precision of the rollers 23, 24.

The supporting and working apparatus 19 preferably comprises as well at least one counteracting and retaining member for the workpiece, arranged on an upper side of the frame 20 opposite the supporting and sliding members 23, 24, so as to maintain in position the workpiece placed on said supporting and sliding members 23, 24.

In the preferred embodiment, herein shown, the apparatus 19 comprises in particular a first and a second counteracting and retaining members 33, 34 for the workpiece, in the form of two rollers 33, 34 carried by the free ends respectively of a third and a fourth rocking arm 35, 36, hinged to the support frame 20 tangentially to the annular element 21 of the apparatus 19, so as to protrude within the same annular element 21, on an upper side of said annular element 21, at symmetrical positions with respect to the vertical line passing through the longitudinal reference axis and diametrically opposite the supporting rollers 23, 24.

Similarly to the supporting rollers 23, 24, also the counteracting rollers 33, 34 lie and move, by suitable actuating means, orthogonally to the longitudinal reference axis, in respective planes passing through the reference axis itself, and have rotational axes orthogonal to each other, sloping symmetrically at 45° with respect to the vertical line, and also orthogonal and spaced apart with respect to the longitudinal reference axis of the apparatus 19; similarly, the hinging axes 35', 36' of the third and the fourth rocking arm 35, 36, visible in Figure 4, have an arrangement similar to the rotational axes of the counteracting rollers 33, 34, said hinging axes 35', 36' being however arranged parallel and spaced apart with respect to the same rotational axes in longitudinal direction.

The actuating means for moving the counteracting rollers 33, 34 in the respective planes passing through the longitudinal reference axis, preferably comprises a first and a second pneumatic cylinders 37, 38, carried by the frame 20, each of said pneumatic cylinders having a movable rod, operatively connected with a rear extension 39 of a respective rocking arm 35, 36, which rear extension 39 extends at an opposite end of the arm itself with respect to the counteracting rollers 33, 34.

As already said, the supporting and working apparatus 19 comprises first actuating means conformed to move the working device 22 as a function of an operative program stored in a control unit.

Preferably, the first actuating means comprises a first electric geared motor 40 for controlling the rotation of the annular element 21 that supports the working device 22, which first geared motor 40 has a double series of gear wheels, not shown, which engage, with nullified clearance, the peripheral gear teeth 41 provided circumferentially to the annular element 21 for controlling the rotation of said annular element 21 around the longitudinal reference axis, said longitudinal reference axis defining a first movement axis for the working device 22.

This establishes that the operative axis AL of the working device 22 can rotate around the longitudinal reference axis in a plane orthogonal to the reference axis itself.

Furthermore, the first actuating means preferably comprises a Cartesian-type robotised system, for moving the working device along two further axes lying in a plane orthogonal to the longitudinal reference axis.

In the shown embodiment, the robotised system comprises a first slide 42 having runners 42' movable along parallel sliding guides 43 provided on a supporting plate 44, firmly connected with the annular element 21, the plate 44 being in particular arranged at a fore end of the annular element 21 and lying in said plane orthogonal to the longitudinal reference axis.

The robotised system comprises as well a second slide 45 to which the working device 22 is fixed, which slide 45 is movable along a sliding guide 46 arranged on the first slide 42 so as to lie orthogonally to the sliding guides 43 of said first slide 42.

The first and the second slides 42, 45 have respective actuating means for enabling a controlled movement of said slides along the relative sliding guides 43, 46.

Preferably, the actuating means for the first slide 42 comprises an electric geared motor 47 carried by the supporting plate 44 and conformed to transmit the rotational movement of said electric geared motor 47 to belts 48 arranged parallel to the sliding guides 43 and operatively connected with the runners 42' of the slide 42.

The actuating means for the second slide 45 comprises in turn an electric geared motor 49 carried by the first slide 42 and conformed to transmit the rotational movement of said electric geared motor 49 to a belt 50 arranged parallel to the sliding guide 46 and operatively connected with the second slide 45.

The first actuating means for moving the working device is not excluded to be possibly of other type, for example a robotised system of anthropomorphous type, or another convenient system.

The supporting and working apparatus 19 according to the present invention comprises as well at least a first and a second detecting means 51, for example in the form of laser optical sensors, or mechanical feeler sensors, or other suitable type, for detecting the position and/or the distance of the workpiece P with respect to the longitudinal reference axis, which detecting means 51 are arranged on the support frame 20 at the first, respectively the second supporting and sliding members 23, 24, for generating reference signals linked to deformations of the workpiece P along its own axis, which reference signals are stored in the electronic control unit.

Preferably, the detecting sensors 51 are arranged orthogonally to the longitudinal reference axis and pointed towards said longitudinal reference axis with a sloping angle of 45° with respect to the vertical line, so as to obtain two detection records mutually at 90° and to enable thus a detection of the workpiece deformation in the space.

According to the present invention, the second actuating means 27, 28 for the supporting and sliding rollers 23, 24 of the workpiece are selectively operatable at each cross section to be worked of the workpiece P, to position in relation to each other the working device 22 and the workpiece P orthogonally to the longitudinal reference axis, in a plane orthogonal to the operative axis AL of the working device 22, as a function of working parameters stored in the control unit and/or as a function of the reference signals generated by said detecting means 51 at each cross section of the workpiece P and stored in the control unit.

Alternatively or in combination with the operation of the actuating means 27, 28 for the supporting and sliding rollers 23, 24, in order to position in relation to each other the working device 22 and the workpiece P orthogonally to the longitudinal reference axis, in a plane orthogonal to the operative axis AL of the working device, at each cross section to be worked of the workpiece P the first actuating means 40, 47, 49 for the working device 22 can be selectively actuated as a function of working parameters stored in the control unit and/or as a function of the reference signals generated by the detecting means 51 at each cross section of the workpiece P.

Thanks to the apparatus 19 for supporting and working axially developing workpieces, according to the present invention, and the working plant comprising said apparatus 19, working operations can be performed, selectively and in versatile mode, on the workpieces with dimensions referred to the effective axis of said workpieces or referred to an imaginary axis or straight line, as a function of the requirements or the end use of the workpieces.

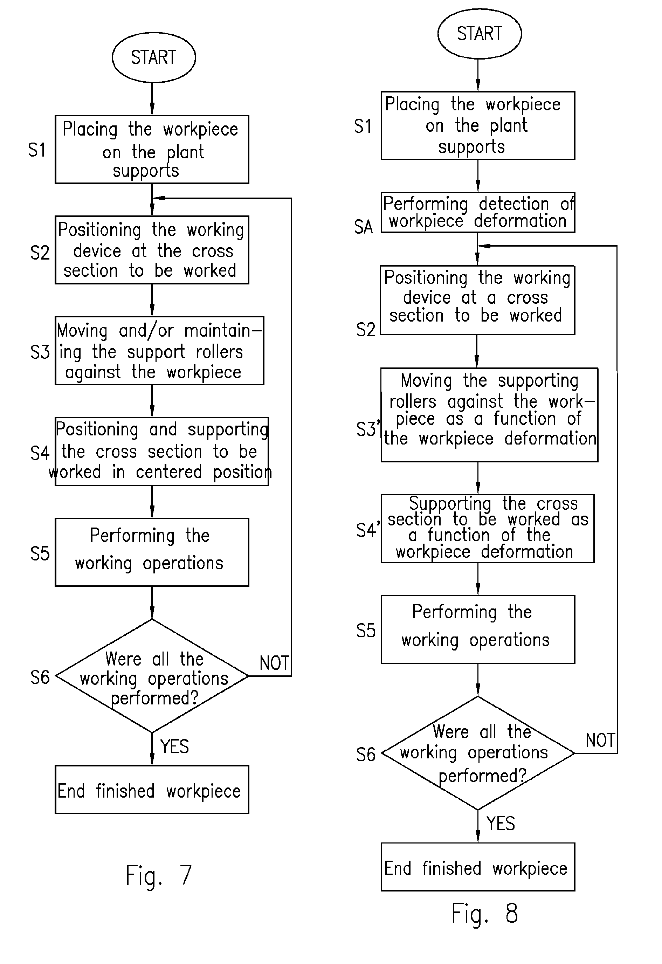

Actually, the working plant according to the present invention can be used for carrying out working operations on the workpieces with dimensions referred to the effective axis of the same workpieces, according to a first operative mode hereinafter indicated as "relative mode", that comprises, as better shown in Figure 7, the following operative steps of:
placing (S1) a workpiece P on the support bars 14 of the plant 10, by laying said workpiece P on the receiving seats 14' provided at the upper ends of said bars 14;
axially positioning (S2) the working device 22 at a first cross section to be worked of the axially developing workpiece P by moving the guide trolley 20' of the frame 20 provided with the working device 22 along the beam 11, and then along the workpiece P;
moving and/or maintaining (S3) the supporting and sliding rollers 23, 24 of the apparatus 19 against lower side surfaces of the axially developing workpiece P at the cross section to be worked of the workpiece P;
positioning and supporting (S4) the cross section to be worked of the workpiece P in relation to the working device by the supporting and sliding rollers 23, 24, orthogonally to the longitudinal reference axis AR in a plane orthogonal to the operative axis AL of the working device, for defining a working position of the cross section to be worked which is coaxial or centered with respect to the same longitudinal reference axis AR;
performing (S5) one or more working operations with the working device in said cross section to be worked; and
repeating (S6) the steps of positioning the working device, moving and/or maintaining the supporting rollers against side surfaces of the workpiece, positioning and supporting the cross section to be worked in the working position centered by the supporting rollers, and performing the working operations for each cross section to be worked of the axially developing workpiece.

The step of moving the supporting rollers 23, 24 against the side surfaces of the workpiece P and the step of positioning and supporting the cross section to be worked in a centered working position are performed as a function of working parameters stored in the control unit, such as the shape and the dimensions of the cross section to be worked, so as to enable the rollers 23, 24 to be positioned in such a way to cause said cross section to be worked to be centered or coaxially arranged with respect to the longitudinal reference axis of the apparatus 19.

In the shown embodiment, when the annular element 21 provided with the working device 22 needs to pass, during its own longitudinal movement, one or more support bars 14 for the workpiece P, the step of positioning the working device 22 provides as well that the involved support bar or bars 14 are placed in disengagement position of the workpiece P and that the rollers 23, 24 of the apparatus 19 support the workpiece P at least at the support bar or bars 14 that were disengaged.

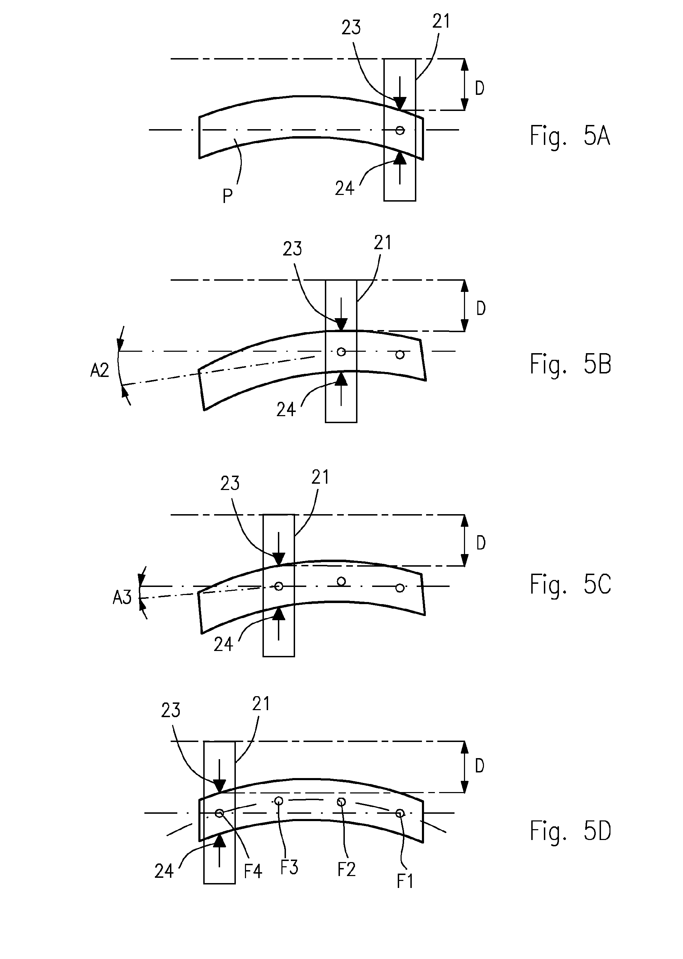

In order to better understand said relative mode for working the workpieces, that is suitable for example for working tendentially deformable sections or workpieces of small cross section, that can be straightened, at work site, by the connection with the other elements of the structure where said workpieces must be mounted, reference is now made to the schematic working sequence shown in the Figures 5A to 5D, in which a generic workpiece is shown having a deformation, in particular a curvature along its own axis, intentionally accentuated for illustrative purposes, with respect to an imaginary rectilinear workpiece, and in which, by way of example, the execution is provided of a series of longitudinally spaced apart holes along the workpiece, with the operative axis AL of the working device being arranged orthogonally to the plane of the drawing sheet whereon the same Figures are shown.

In particular, with reference at first to the Figure 5A, after the workpiece P has been arranged on the support bars, not shown, the annular element 21 with the working device is axially positioned at a first cross section to be worked of the axially developing workpiece P and the supporting and sliding rollers 23, 24 of the apparatus are moved orthogonally to the reference axis AR and maintained against lower side surfaces of the axially developing workpiece P at the working device, so as to position and support the cross section to be worked in a working position that is coaxial or centered with respect to the longitudinal reference axis AR of the apparatus, in a plane orthogonal to the operative axis AL of the working device.

By positioning and supporting the cross section to be worked of the workpiece in such working position, centered with respect to the longitudinal reference axis, by the supporting and sliding rollers 23, 24, a hole F1 or other working operation can thus be performed, with exact dimensions with respect to the axis or the real profile of said workpiece, the rollers 23, 24 being placed centered in the annular element 21, with a fixed distance D from the same element 21.

In the following Figures 5B to 5D, the annular element 21, provided with the working device, is successively positioned at further cross sections to be worked of the workpiece P, the supporting rollers 23, 24 being maintained fixed in the transversal position of Figure 5A defined above, so as to support each cross section to be worked in a respective working position that is centered with respect to the longitudinal reference axis AR; thanks to the above, also the holes F2, F3 and F4, carried out respectively in the cross sections to be worked shown in the Figures 5B, 5C and 5D, will have exact dimensions with respect to the axis or real profile of the workpiece.

Thus, as it appears clear in Figure 5D, the carried out holes F1, F2, F3 and F4 come to lie altogether along a curved line that is coincident or parallel to the real axis of the workpiece, with an error with respect to an imaginary straight line.

Centering of each cross section to be worked with respect to the reference axis AR takes place by means of the pushing action exerted in orthogonal direction to the same axis AR by the supporting and sliding rollers 23, 24 of the working apparatus, which pushing action causes a movement and/or a rotation, that is equal for example to the angles A2 and A3 of the workpiece on the support bar or bars in planes orthogonal to the operative axis AL of the working device.

As already said, the working plant according to the present invention can be used as well for performing working operations on the workpieces with dimensions referred to an axis or an imaginary line, according to a further operative mode hereinafter indicated as "absolute mode", that, as better shown in Figure 8, comprises the following operative steps of:
placing (S1) a workpiece P on the support bars 14 of the plant 10, by laying said workpiece P on the receiving seats 14' provided at the upper ends of the same bars 14;
performing (SA) a detection of the workpiece P deformation along the axis of said workpiece P by the detecting means 51 arranged on the frame 20 of the working apparatus 19, by moving the support frame 20 in axial direction along the workpiece;
axially positioning (S2) the working device 22 at a first cross section to be worked of the axially developing workpiece P by moving the guide trolley 20' of the frame 20 provided with the working device 22 along the beam 11, and then along the workpiece P;
moving (S3') the supporting and sliding rollers 23, 24 of the apparatus 19 against lower side surfaces of the axially developing workpiece P at the working device 22, as a function of working parameters stored in the control unit and as a function of the reference signals of the deformation generated by said detecting means at each cross section of the workpiece;
supporting (S4') the cross section to be worked of the workpiece P in relation to the working device by the supporting and sliding rollers 23, 24, orthogonally to the longitudinal reference axis AR in a plane orthogonal to the operative axis AL of the working device, for defining a working position of the cross section to be worked with respect to the working device as a function of the working parameters and as a function of the reference signals of the workpiece deformation, in such a way that the supporting and sliding rollers 23, 24 remain simply in contact with the side surfaces of the workpiece P for the purposes of supporting said workpiece P, without causing a movement of said workpiece P in direction orthogonal to the reference axis AR;
performing (S5) one or more working operations with the working device in said cross section to be worked; and
repeating (S6) the steps of positioning the working device, moving the supporting rollers against side surfaces of the workpiece and supporting the cross section to be worked in the working position as a function of working parameters and as a function of the reference signals of the workpiece deformation, and performing the working operations for each cross section to be worked of the axially developing workpiece.

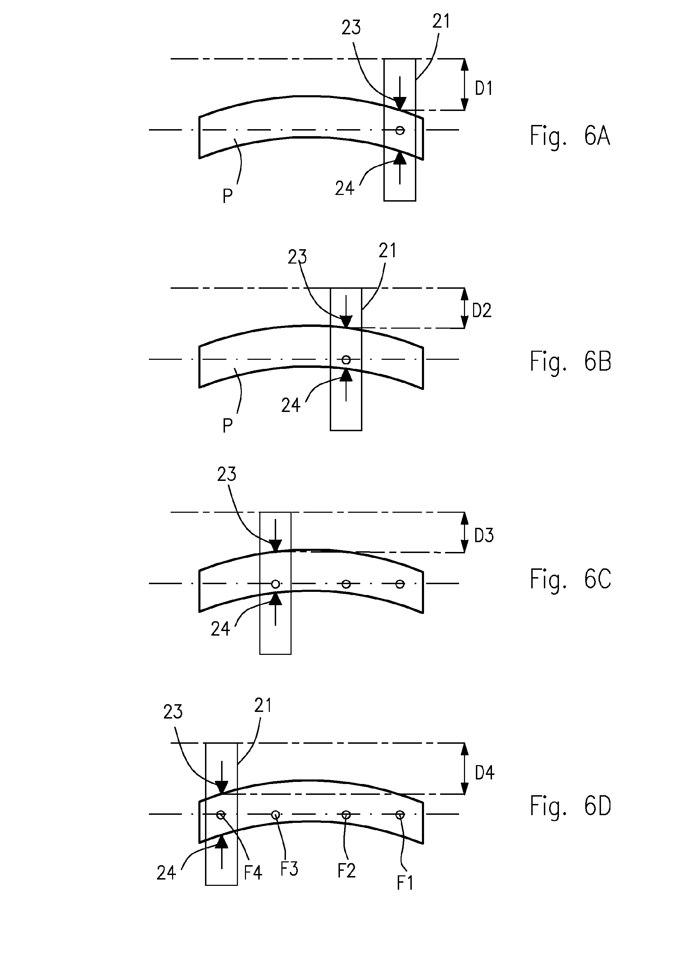

In order to better understand said absolute mode of working the workpieces, adapted for example for working stiff sections or workpieces, of remarkable dimensions, accountable for the spatial alignment of other elements of the structure in which said workpieces have to be mounted, reference is now made to the schematic working sequence shown in the Figures 6A to 6D, in which, similarly to the Figures 5A to 5D, a generic workpiece is shown having a deformation, in particular a curvature along its own axis, intentionally accentuated for the illustrative purposes, with respect to an imaginary rectilinear workpiece, and in which, by way of example, the execution of a series of longitudinally spaced apart holes is still provided along the workpiece, with the operative axis AL of the working device being arranged orthogonally to the plane of the drawing sheet whereon the same Figures are shown.

In particular, with reference at first to the Figure 6A, after the workpiece P has been arranged on the support bars, not shown, and after a detection of the workpiece deformation P along its own axis has been performed by the detecting means arranged on the frame of the working apparatus, the annular element 21 with the working device is axially positioned at a first cross section to be worked of the axially developing workpiece P and the supporting and sliding rollers 23, 24 of the working apparatus are moved orthogonally to the reference axis AR and positioned, for example at a distance D1 from the annular element 21, against lower side surfaces of the workpiece P at the working device, so as to simply support the cross section to be worked, without causing a movement of said workpiece P in direction orthogonal to the reference axis AR.

Such positioning of the supporting rollers 23, 24 in simple contact with the side surfaces of the workpieces P is made possible by the use of the reference signals of the deformation generated by the detecting means, which reference signals enable the real profile of each workpiece P to be reconstructed and then said rollers 23, 24 to be moved in a controlled mode by the actuators 27, 28.

By supporting the cross section to be worked of the workpiece in such working position according to the real profile of said workpiece by the supporting and sliding rollers 23, 24, a hole F1 or other working operation can thus be performed, with exact dimensions with respect to an imaginary straight line, the supported workpiece being subjected to no movements in direction orthogonal to the reference axis.

In the following Figures 6B to 6D, the annular element 21 provided with the working device is successively positioned at further cross sections to be worked of the workpiece P, by moving the supporting rollers 23, 24 as a function of the reference signals of the workpiece deformation, for example by setting respectively variable distances D2, D3, D4 from the annular element 21, so as to support each cross section to be worked in a respective working position corresponding to the real profile of the workpiece P; thanks to this, the holes F2, F3 and F4 carried out respectively in the cross sections to be worked shown in the Figures 6B, 6C and 6D by the working device maintained stationary, will have as well exact dimensions with reference to an imaginary straight line.

Thus, as it appears clear in Figure 6D, the carried out holes F1, F2, F3 and F4 come overall to lie along a straight line coincident or parallel to the longitudinal reference axis, but with an error with respect to the borders of the profile depending on the deformation specific to each workpiece.

Supporting the cross section to be worked by the rollers 23, 24 is fundamental both for the purposes of defining the working position of said cross section, and for the purposes of carrying the workpiece when one of the support bars 14 of the working plant is brought into disengagement position from the workpiece for enabling the guide trolley 20' of the apparatus 19 to be moved along the same workpiece P.

Alternatively or in combination with the movement of the supporting and sliding rollers 23, 24 as disclosed above, in order to perform the working operations in absolute mode, according to the present invention, the working device 22 can be moved orthogonally to the reference axis AR in a plane orthogonal to the operative axis AL of said working device 22, as a function of the reference signals of the workpiece deformation, the supporting rollers 23, 24 being maintained so as to position each cross section to be worked centered with respect to the longitudinal reference axis, the same results disclosed above being so achieved.

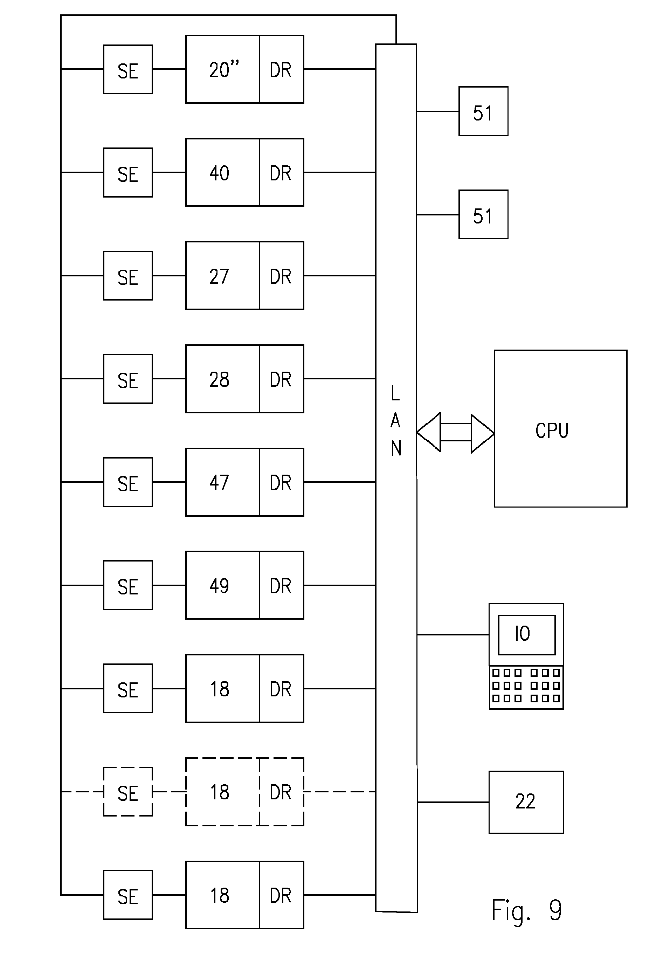

With reference now to the block diagram of Figure 9, a simplified example of the system for controlling the working plant will be now schematically described; in particular, the control system of the example comprises a central control unit CPU that controls a machine local network LAN (Local Area Network), with which all the electronic actuators and the detecting means 51 of the working plant are connected, and also an operator interface IO is connected, for example a computerised station for inputting the data and for programming the working operations.

Each of the electric actuators 18, 20", 27, 28, 40, 47, 49 of the working plant preferably comprises an electric brushless motor with relative operating driver DR, and an integrated sensor SE capable of enabling an exact positioning of the members to be controlled which are connected with said integrated sensor SE; if necessary, the actuators may provide also an external absolute sensor, not shown, capable of resetting the clearances. The software installed within the CPU will be preset for controlling all the devices of the working plant and for allowing all the data required for programming the working operations to be inputted.

The preferred embodiment, described above, of the working plant according to the invention, in which the workpieces P are not axially moved, whereas the working apparatus 19 is moved along the workpiece, allows the longitudinal overall dimensions of said working plant to be reduced, enabling said plant to be installed in reduced working spaces.

However, the working plant according to the invention is not excluded from being differently configured, by providing that the supporting and working apparatus is secured to the structure of the working plant and that the workpieces are supported axially movable, for example by means of a series of cylindrical rollers and by means of suitable control means for axially moving the workpieces, so as to enable the various cross sections to be worked of the workpieces to be positioned at the working device.

All the above, which was described and shown with reference to the enclosed drawings, was given for mere exemplifying and explanatory purposes of the general features of the invention, and also of some preferred embodiments thereof; therefore, other modifications and variations of the apparatus for supporting and working axially developing workpieces, of the working plant comprising said apparatus, and of the method for working the workpieces in said working plant are possible, without thereby departing from the scope of the claims.

## Claims

1. Supporting and working apparatus (19) for supporting and working axially developing workpieces (P) for a working plant (10), in which each workpiece (P) extends along a longitudinal axis, the supporting and working apparatus (19) comprising:
a support frame (20),
an annular element (21) rotatably carried by said support frame (20) to rotate around the workpiece (P), said annular element (21) being provided with at least one working device (22) movable in a controlled mode and first actuating means (40, 47, 49) for moving the working device (22) as a function of an operative program stored in a control unit, the working device (22) having an operative axis (AL) of working; the support frame (20) and the workpiece (P) being movable in relation to each other in the direction of a longitudinal reference axis (AR), for positioning the working device (22) at cross sections to be worked along the same workpiece (P),
**characterised by** comprising:
at least a first and a second supporting and sliding members (23, 24) for the workpiece (P), angularly spaced apart on said support frame (20), each of said supporting and sliding members (23, 24) being movable orthogonally to the longitudinal reference axis (AR) in a plane passing through the same reference axis (AR),
second actuating means (27, 28) for moving said supporting and sliding members (23, 24) for the workpiece (P), and
at least a first and a second detecting means (51) for detecting the position of the workpiece (P) in relation to said longitudinal reference axis (AR), arranged on said support frame (20) at said first, respectively said second supporting and sliding members (23, 24), said detecting means (51) being conformed to generate reference signals linked to deformations of the workpiece (P) along its own axis,
said first actuating means (40, 47, 49) for the working device (22) and/or said second actuating means (27, 28) for the supporting members (23, 24) of the workpiece (P) being selectively operatable at each cross section to be worked of the workpiece (P), to position in relation to each other the working device (22) and the workpiece (P) orthogonally to the longitudinal reference axis (AR), in a plane orthogonal to the operative axis (AL) of the working device (22), as a function of working parameters stored in the control unit and/or as a function of the reference signals generated by said detecting means (51) at each cross section of the workpiece (P).

2. Supporting and working apparatus (19) according to claim 1, **characterised in that** the supporting and sliding members (23, 24) are in the form of a first and a second rollers (23, 24) carried by the free ends of a first, respectively a second rocking arms (25, 26) hinged to the support frame (20) tangentially to the annular element (21) of the apparatus (19), said supporting and sliding rollers (23, 24) protruding within the annular element (21), on a lower side of said annular element (21), in symmetrical positions with respect to the vertical line passing through the longitudinal reference axis (AR).

3. Supporting and working apparatus (19) according to claim 2, **characterised in that** the supporting and sliding rollers (23, 24) lie and move orthogonally to the longitudinal reference axis (AR) in a respective plane passing through the same reference axis, the supporting rollers (23, 24) having rotational axes orthogonal to each other, sloping symmetrically at 45° with respect to the vertical line, and also orthogonal and spaced apart with respect to the longitudinal reference axis (AR) of the apparatus (19), said first and second rocking arms (25, 26) having hinging axes (26') arranged parallel and spaced apart from the rotational axes of the supporting rollers (23, 24), in a longitudinal direction.

4. Supporting and working apparatus (19) according to claim 2, **characterised in that** said second actuating means (27, 28) for moving the supporting and sliding rollers (23, 24) comprise an electric geared motor (27, 28) for each support arm (25, 26) for the supporting rollers (23, 24), said geared motor (27, 28) being carried by the frame (20) of the apparatus (19) for rotationally driving a screw (30) of a screw-nut mechanism (30, 31), wherein the feed nut (31) is operatively connected with a respective rocking arm (25, 26) supporting the rollers (23, 24).

5. Supporting and working apparatus (19) according to claim 1, **characterised by** comprising at least one counteracting and retaining member (33, 34) for the workpiece (P), arranged on an upper side of the frame (20) opposite the supporting and sliding members (23, 24).

6. Supporting and working apparatus (19) according to claim 5, **characterised by** comprising a first and a second counteracting and retaining members (33, 34) for the workpiece (P), in the form of two rollers (33, 34) carried by a third, respectively a fourth rocking arms (35, 36) hinged to the support frame (20) tangentially to the annular element (21) of the apparatus (19), said counteracting rollers (33, 34) protruding within the annular element (21), on an upper side of said annular element (21), in symmetrical positions with respect to the vertical line passing through the longitudinal reference axis (AR) and diametrically opposite said supporting rollers (23, 24).

7. Supporting and working apparatus (19) according to claim 1, **characterised in that** said first actuating means (40, 47, 49) for moving the working device (22) comprises a first electric geared motor (40) for controlling the rotation of the annular support element (21) of the working device (22), and also a Cartesian type robotised system (42, 45, 47, 49) conformed to move the working device (22) along two axes lying in a plane orthogonal to the longitudinal reference axis (AR).

8. Supporting and working apparatus (19) according to claim 1, **characterised in that** said first and second detecting means (51) are in the form of laser optical sensors (51) or mechanical feeler sensors, arranged orthogonally to the longitudinal reference axis (AR) and pointed towards the same axis with a sloping angle of 45° with respect to the vertical line.

9. A working plant (10) for working axially developing workpieces (P) having a longitudinal axis, said plant (10) comprising:
a base structure (11, 12, 13); and
support means (14) on said base structure (11, 12, 13) for supporting the workpiece (P),
**characterised by** comprising:
a supporting and working apparatus (19) for said axially developing workpieces (P) according to claim 1, and
movement means (20', 20") for moving the supporting and working apparatus (19) and the workpiece (P) in relation to each other in the direction of said longitudinal reference axis (AR).

10. Working plant (10) for working axially developing workpieces (P) according to claim 9, **characterised in that** said relative movement means (20', 20") comprises a guide trolley (20') for the support frame (20) of the supporting and working apparatus (19), said guide trolley (20') being movable axially on said base structure (11, 12, 13) along the workpiece (P), and
**in that** said support means (14) for the workpiece (P) comprises a plurality of support elements (14) axially spaced apart from each other along said base structure (11, 12, 13), said support elements (14) being conformed and arranged to support the workpiece (P) in a working position parallel to the base structure (11, 12, 13) of the plant (10),
each support element (14) being selectively movable between a support position and a disengagement position of the workpiece (P),
the guide trolley (20') for said supporting and working apparatus (19) being movable along the base structure (11, 12, 13), or part thereof, with said support elements (14) placed in a disengagement position of the workpiece (P).

11. Working plant (10) for working axially developing workpieces (P) according to claim 10, **characterised in that** each of said support elements (14) is in the form of a vertical bar (14) having a suitable seat (14') on the upper part for receiving the workpiece (P), said support bar (14) being vertically slidable to be selectively movable between a raised support position and a lowered disengagement position of the workpiece (P).

12. Working plant (10) for working axially developing workpieces (P) according to claim 11, **characterised by** providing actuating means (17, 18) for moving the support bars (14), said actuating means (17, 18) comprising a screw-nut mechanism (17) and an electric geared motor (18) for each support bar (14).

13. Working plant (10) for working axially developing workpieces (P) according to claim 9, **characterised in that** the supporting and working apparatus (19) is secured to the structure (11, 12, 13) of the plant (10), said support means for the workpiece comprising a plurality of cylindrical rollers conformed to support the workpieces in an axially movable way, said relative movement means comprising control means for axially moving the workpieces (P).

14. Working method for working axially developing workpieces (P), adapted for a working plant (10) for working axially developing workpieces (P) according to claim 9, comprising the steps of:
placing (S1) a workpiece (P) on said support means (14);
axially positioning (S2) the working device (22) at a first cross section to be worked of the axially developing workpiece (P) by moving the support frame (20) of the working apparatus (19) and the workpiece (P) in relation to each other;
performing (S5) one or more working operations with the working device (22) in said cross section to be worked; and
repeating (S6) the step of positioning (S2) the working device (22) and the step of performing (S5) the working operations for each cross section to be worked of the axially developing workpiece (P),
**characterised by** comprising, prior to said step of performing (S5) the working operations and for each cross section to be worked of the workpiece (P), the supplementary steps of:
moving and/or maintaining (S3) the supporting and sliding members (23, 24) of the supporting and working apparatus (19) against lower side surfaces of the axially developing workpiece (P) at the cross section to be worked; and
positioning and/or supporting (S4) the cross section to be worked of the axially developing workpiece (P) in relation to the working device (22) by the supporting and sliding members (23, 24), orthogonally to the longitudinal reference axis (AR) in a plane orthogonal to the operative axis (AL) of the working device (22), for defining a working position of the cross section to be worked with respect to the working device (22) during the step of performing (S5) the working operations.

15. Working method for working axially developing workpieces (P) according to claim 14, **characterised by** comprising, prior to the step of positioning (S2) the working device (22), the step of:
performing (SA) a detection of the workpiece deformation along its own axis by said detecting means (51), by moving in relation to each other in an axial direction the workpiece (P) and the support frame (20) provided with the detecting means (51);
and **characterised in that**, before the step of performing (S5) the working operations and at each cross section to be worked of the axially developing workpiece (P), said supporting and sliding members (23, 24) of the workpiece (P) and/or said working device (22) are moved (S3') as a function of working parameters stored in the control unit and/or as a function of the reference signals generated by said detecting means (51) at each cross section of the workpiece (P), and
**in that** the cross section to be worked of the axially developing workpiece (P) and the working device (22) are positioned (S4') in relation to each other orthogonally to the longitudinal reference axis (AR), in a plane orthogonal to the operative axis (AL) of the working device, for defining a working position of the cross section to be worked with respect to the working device (22) as a function of said working parameters and said reference signals of the workpiece deformation.

16. Working method for working axially developing workpieces (P) according to claim 15, **characterised in that** the supporting and sliding rollers (23, 24) are moved against lower side surfaces of the axially developing workpiece (P) as a function of the reference signals of deformation generated by said detecting means (51) at each cross section of the workpiece (P), and **in that** the cross section to be worked of the workpiece (P) is supported in relation to the working device (22), in such a way that the supporting and sliding rollers (23, 24) remain simply in contact with the side surfaces of the workpiece (P), as a function of the reference signals of the deformation generated by said detecting means (51).

17. Working method for working axially developing workpieces (P) according to claim 14, **characterised in that** the supporting and sliding rollers (23, 24) are moved and maintained against lower side surfaces of the axially developing workpiece (P), and **in that**, by the supporting and sliding rollers (23, 24), each cross section to be worked of the workpiece (P) is positioned and supported in relation to the working device (22), orthogonally to the longitudinal reference axis (AR) in a plane orthogonal to the operative axis (AL) of the working device (22), for defining a working position of the cross section to be worked which is coaxial or centered with respect to the longitudinal reference axis (AR).

## Amended claims

### Amended claims in accordance with Rule 137(2) EPC.

**1.** Supporting and working apparatus (19) for supporting and working axially developing workpieces (P) for a working plant (10), in which each workpiece (P) extends along a longitudinal axis, the supporting and working apparatus (19) comprising:
a support frame (20),
an annular element (21) rotatably carried by said support frame (20) to rotate around the workpiece (P), said annular element (21) being provided with at least one working device (22) movable in a controlled mode and first actuating means (40, 47, 49) for moving the working device (22) as a function of an operative program stored in a control unit, the working device (22) having an operative axis (AL) of working; the support frame (20) and the workpiece (P) being movable in relation to each other in the direction of a longitudinal reference axis (AR), for positioning the working device (22) at cross sections to be worked along the same workpiece (P),
**characterised by** comprising:
at least a first and a second supporting and sliding members (23, 24) for the workpiece (P), angularly spaced apart on a lower side of said support frame (20), each of said supporting and sliding members (23, 24) being movable orthogonally to the longitudinal reference axis (AR) in a plane passing through the same reference axis (AR),
second actuating means (27, 28) for moving said supporting and sliding members (23, 24) for the workpiece (P), and
at least a first and a second detecting means (51) for detecting the position of the workpiece (P) in relation to said longitudinal reference axis (AR), arranged on said support frame (20) at said first, respectively said second supporting and sliding members (23, 24), said detecting means (51) being conformed to generate reference signals linked to deformations of the workpiece (P) along its own axis,
said first actuating means (40, 47, 49) for the working device (22) and/or
